(19) Europäisches Patentamt
European Patent Office
Office européen des brevets

(11) EP 4 283 736 A1

(12) **EUROPEAN PATENT APPLICATION**
published in accordance with Art. 153(4) EPC

(43) Date of publication:
**29.11.2023 Bulletin 2023/48**

(21) Application number: **21921501.9**

(22) Date of filing: **29.12.2021**

(51) International Patent Classification (IPC):
***H01M 10/0567*** *(2010.01)* ***H01M 4/525*** *(2010.01)*
***H01M 10/052*** *(2010.01)*

(86) International application number:
**PCT/KR2021/020164**

(87) International publication number:
**WO 2022/158744 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2021 KR 20210008791**

(71) Applicant: **Samsung SDI Co., Ltd.**
**Yongin-si, Gyeonggi-do 17084 (KR)**

(72) Inventors:
- **KIM, Soo Jin**
  **Yongin-si, Gyeonggi-do 17084 (KR)**
- **SEO, Jin Ah**
  **Yongin-si, Gyeonggi-do 17084 (KR)**
- **LEE, Jun Yong**
  **Yongin-si, Gyeonggi-do 17084 (KR)**
- **JEONG, Hye Jeong**
  **Yongin-si, Gyeonggi-do 17084 (KR)**
- **TSAY, Olga**
  **Yongin-si, Gyeonggi-do 17084 (KR)**
- **CHOI, Sun Joo**
  **Yongin-si, Gyeonggi-do 17084 (KR)**
- **KIM, Sang Hoon**
  **Yongin-si, Gyeonggi-do 17084 (KR)**
- **KIM, Yun Hee**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

# (54) ELECTROLYTE FOR LITHIUM SECONDARY BATTERY AND LITHIUM SECONDARY BATTERY COMPRISING SAME

(57) Disclosed are an electrolyte for a lithium secondary battery and a lithium secondary battery including the same, the electrolyte including: a lithium salt; an organic solvent; and an additive, wherein the additive includes an isocyanate-based additive and a carbonate-based additive, wherein the ratio of the weight of the carbonate-based additive to the weight of the isocyanate-based additive is greater than 1.

FIG. 1

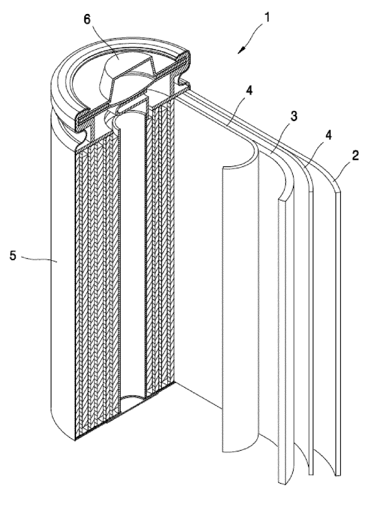


EP 4 283 736 A1

## Description

### TECHNICAL FIELD

The present disclosure relates to an electrolyte for a lithium secondary battery, and a lithium secondary battery including the same.

### BACKGROUND ART

Lithium batteries are used as power sources for portable electronic devices such as camcorders, cell phones, and laptop computers. Rechargeable lithium secondary batteries can be recharged at faster rates and have a high energy density per unit weight compared to existing lead storage batteries, nickel-cadmium batteries, nickel-hydride batteries, nickel-zinc batteries, or the like.

Lithium batteries operate at a high driving voltage, and thus, an aqueous electrolytic solution that is highly reactive with lithium should not be used in lithium batteries. Generally, in lithium secondary batteries, an organic electrolytic solution is used. Organic electrolytes are manufactured by dissolving a lithium salt in an organic solvent. An example of a preferable organic solvent is one that is stable at a high voltage, has high ion conductivity and permittivity, and has a low viscosity.

However, when an organic electrolyte containing a lithium salt is used as an electrolyte for a lithium secondary battery, the lifespan characteristics, long-term durability, high-temperature stability, etc. of the lithium secondary battery may deteriorate due to side reactions between negative electrode/positive electrode and the electrolyte.

Accordingly, there is a demand for an electrolyte for lithium secondary batteries that is able to provide a lithium secondary battery with improved lifespan characteristics and long-term durability.

### DESCRIPTION OF EMBODIMENTS

### TECHNICAL PROBLEM

One aspect of the disclosure provides an electrolyte for a lithium secondary battery, which is capable of improving long-term durability and lifespan characteristics of a lithium secondary battery.

Another aspect of the disclosure provides a lithium secondary battery including the electrolyte for a lithium secondary battery.

### SOLUTION TO PROBLEM

According to one aspect of the disclosure,

an electrolyte for a lithium secondary battery includes: a lithium salt; an organic solvent; and an additive,
wherein the additive may include an isocyanate-based additive and a carbonate-based additive,
wherein the ratio of the weight of the carbonate-based additive to the weight of the isocyanate-based additive may be greater than 1.

According to another aspect of the disclosure,

a lithium secondary battery includes: a positive electrode including a positive electrode active material;
a negative electrode including a negative electrode active material; and
the above-described electrolyte located between the positive electrode and the negative electrode.

### ADVANTAGEOUS EFFECTS OF DISCLOSURE

By using an electrolyte for a lithium secondary battery according to an embodiment, an improvement in the long-term durability and lifespan characteristics of a lithium secondary battery may be achieved.

### BRIEF DESCRIPTION OF DRAWINGS

FIG. 1 is a schematic diagram of a lithium secondary battery according to an embodiment.

MODE OF DISCLOSURE

Hereinbelow, an electrolyte for a lithium secondary battery, and a lithium secondary battery including the electrolyte according to embodiments will be described in greater detail.

An electrolyte for a lithium secondary battery according to an embodiment includes:

a lithium salt; an organic solvent; and an additive,
wherein the additive may include an isocyanate-based additive and a carbonate-based additive,
the ratio of the weight of the carbonate-based additive to the weight of the isocyanate-based additive may be greater than 1.

An isocyanate-based additive may improve battery characteristics by forming a film that induces improvement in long-term durability of a battery through surface reactions after chemical adsorption on the surface of an electrode. Even when mixed with other additives, an isocyanate-based additive may exhibit dominant characteristics since the characteristics of low-resistance additive formed through additional reactions after chemical adsorption occur earlier in the reaction sequence.

When a combination of the isocyanate-based additive and the carbonate-based additive is used, an unexpected improvement was found due to a change that occurs in the composition of a reduced film, during the formation of the reduced film after chemical adsorption upon gas generation at a high temperature. In addition, isocyanate-based additives and carbonate-based additives, when each used alone, produce no improvement in capacity retention ratio at a high temperature; however, when using a mixed composition of the two additives, increases in resistance of the formed film are not large such that there is no capacity fading and gas generation due to side reactions, which may lead to an unexpected improvement in lifespan capacity.

Furthermore, the electrolyte for a lithium secondary battery has an excellent resistance suppression effect on a lithium secondary battery using a lithium transition metal oxide with a high nickel content as a positive electrode active material at high temperatures, and thus may provide a lithium secondary battery with improved lifespan and high temperature stability.

By using a lithium transition metal oxide containing nickel and one or more other transition metals as a positive electrode active material and having a nickel content of, for example, 80 mol% or more with respect to the total number of moles of the transition metals, a lithium secondary battery having high output and high capacity may be manufactured. However, a lithium transition metal oxide having a high nickel content, due to an unstable surface structure, may increase gas generation from side reactions during charge and discharge of the battery, and may worsen elution of transition metals such as nickel. Accordingly, a lithium secondary battery using a lithium transition metal oxide having a high nickel content as a positive electrode active material may have decreased lifespan characteristics and also increased resistance at high temperatures, and therefore, an improvement in stability at high temperatures may be required

An electrolyte for a lithium secondary battery according to an embodiment, by using a combination of an isocyanate-based additive and a carbonate-based additive as an additive, may form an SEI film and/or protection layer with low resistance, and as a result, internal resistance of the battery may decrease. Furthermore, by resolving the above-described issues through a significantly reduction of the amount of nickel eluted during high-temperature storage, a lithium secondary battery having improved lifespan and high-temperature stability due to excellent resistance suppression effect at high temperatures may be prepared.

In the electrolyte for a lithium secondary battery according to an embodiment, the ratio of the weight of the carbonate-based additive to the weight of the isocyanate-based additive may be greater than 1. According to an embodiment, the ratio of the weight of the carbonate-based additive to the weight of the isocyanate-based additive may be greater than 1 to 20 or less. For example, the ratio of the weight of the carbonate-based additive to the weight of the isocyanate-based additive may be greater than 1 to 10 or less. For example, the ratio of the weight of the carbonate-based additive to the weight of the isocyanate-based additive may be greater than 1 to 6 or less. For example, the ratio of the weight of the carbonate-based additive to the weight of the isocyanate-based additive may be from 2 to 6. Within the above ranges, an improvement in the long-term durability and lifespan characteristics of a lithium secondary battery may be achieved. When the ratio of the weight of the carbonate-based additive to the weight of the isocyanate-based additive is 1 or less, only the characteristics of isocyanate, which reacts first, are expressed and thus, a behavior similar to when using only one type of the two additives may be observed.

According to an embodiment, the mixing weight ratio of the isocyanate-based additive and the carbonate-based additive may be in a range of 1: 1.1 to 1: 20, and specifically, for example, may be in a range of 1: 1.5 to 1: 10, 1: 1.5 to 1:6, 1:2 to 1:6, 1:2 to 1:5, or 1:2 to 1:3. Within the above ranges, an improvement in the long-term durability and lifespan characteristics of a lithium secondary battery may be achieved.

According to an embodiment, the isocyanate-based additive may be a compound represented by Formula 1 below.

Formula 1

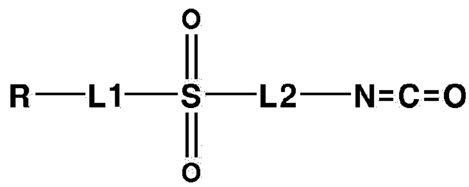

In Formula 1,

L1 and L2 each independently may be an unsubstituted or substituted $C_1$-$C_{30}$ alkylene group,
R may be hydrogen, -F, -Cl, -Br, -I, an isocyanate(-N=C=O) group, a $-CF_3$ group, a cyano group, a nitro group, an amidino group, a hydrazino group, a hydrazono group, an unsubstituted or substituted $C_1$-$C_{20}$ alkyl group, an unsubstituted or substituted $C_2$-$C_{20}$ alkenyl group, an unsubstituted or substituted $C_2$-$C_{20}$ alkynyl group, an unsubstituted or substituted $C_1$-$C_{20}$ alkoxy group, $-Si(Q_1)(Q_2)(Q_3)$, $-N(Q_1)(Q_2)$, $-B(Q_1)(Q_2)$, $-C(=O)(Q_1)$, - $S(=O)_2(Q_1)$, or $-P(=O)(Q_1)(Q_2)$,
wherein at least one substituent in the substituted $C_1$-$C_{30}$ alkylene group, the substituted $C_1$-$C_{20}$ alkyl group, the substituted $C_2$-$C_{20}$ alkenyl group, the substituted $C_2$-$C_{20}$ alkynyl group, and the substituted $C_1$-$C_{20}$ alkoxy group may be selected from among deuterium, -F, -Cl, -Br, -I, a hydroxyl group, a cyano group, a nitro group, an amidino group, a hydrazino group, a hydrazono group, a C1-C10 alkyl group, a C2-C10 alkenyl group, a C2-C10 Alkynyl group, and a C1-C20 alkoxy group, and
$Q_1$ to $Q_3$ each independently may be selected from among hydrogen, deuterium, -F, -Cl, -Br, -I, a hydroxyl group, a cyano group, a nitro group, an amidino group, a hydrazino group, a hydrazono group, a $C_1$-$C_{20}$ alkyl group, a $C_2$-$C_{20}$ alkenyl group, a $C_2$-$C_{20}$ alkynyl group, and a $C_1$-$C_{20}$ alkoxy group.

For example, in Formula 1, R may be selected from among hydrogen, a methyl group, an ethyl group, a propyl group, an iso-propyl group, a butyl group, an iso-butyl group, a sec-butyl group, a tert-butyl group, -F, -Cl, -Br, -I, a methoxy group, an ethoxy group, an ethenyl group, an isocyanate(-N=C=O) group, and $-CF_3$ group.
According to an embodiment, R in Formula 1 may be hydrogen or an isocyanate (-N=C=O) group.
According to an embodiment, the isocyanate-based additive may include a compound represented by Formula 2 below.

Formula 2

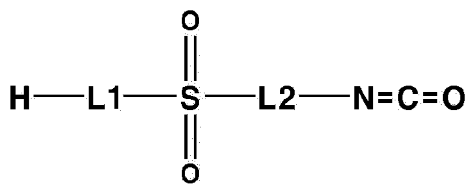

In Formula 2,
L1 and L2 each independently are an unsubstituted $C_1$-$C_{30}$ alkylene group.
The isocyanate-based additive represented by Formula 1 may be a compound represented by Formula 2-1 below.

Formula 2-1

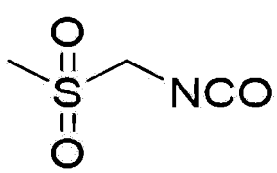

According to an embodiment, the isocyanate-based additive may include a compound represented by Formula

3 below.

Formula 3

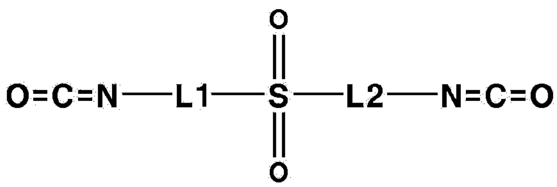

In Formula 3,

L1 and L2 each independently are an unsubstituted $C_1$-$C_{30}$ alkylene group.

The isocyanate-based additive represented by Formula 1 may be a compound represented by Formula 3-1 below.

Formula 3-1

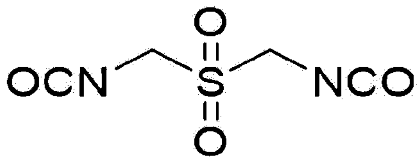

The content of the isocyanate-based compound, with respect to the total weight of the electrolyte, may be in a range of 0.01 wt% to 10 wt%, and for example, in a range of 0.05 wt% to 5 wt%, 0.1 wt% to 3 wt%, or 0.5 wt% to 1 wt%. When the content of the isocyanate-based compound is within the above ranges, it is possible to prepare a lithium secondary battery having improved high-temperature characteristics and resistance characteristics without deterioration in lifespan characteristics by suppressing an increase in interface resistance.

According to an embodiment, the carbonate-based additive may include vinylene carbonate (VC), vinyl ethylene carbonate (VEC), fluoroethylene carbonate (FEC), or a combination thereof.

The content of the carbonate-based compound, with respect to the total weight of the electrolyte, may be in a range of 0.01 wt% to 20 wt%, and may be for example, in a range of 0.05 wt% to 10 wt%, in a range of 0.1 wt% to 5 wt%, or in a range of 0.5 wt% to 3 wt%. When the content of the carbonate-based compound is within the above ranges, increases in interfacial resistance may be suppressed through a combination with an isocyanate-based compound, thereby improving battery performance in terms of capacity, lifespan, and the like.

When vinylene carbonate (VC) is included as the carbonate-based additive, the content of vinylene carbonate (VC) may be in a range of 0.01 wt% to 5 wt% with respect to the total weight of the electrolyte.

When vinyl ethylene carbonate (VEC) is included as the carbonate-based additive, the content of vinyl ethylene carbonate (VEC) may be in a range of 0.01 wt% to 5 wt% with respect to the total weight of the electrolyte.

When fluoroethylene carbonate (FEC) is included as the carbonate-based additive, the content of fluoroethylene carbonate (FEC) may be in a range of 0.01 wt% to 20 wt% with respect to the total weight of the electrolyte.

According to an embodiment, the lithium salt in the electrolyte for a lithium secondary battery may include one or more selected from among $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($2 \leq x \leq 20$, $2 \leq y \leq 20$), LiCl, LiI, lithium bis(oxalato)borate (LiBOB), $LiPO_2F_2$, and compounds represented by Formulas 3 to 6 below. However, without being limited to the aforementioned components, any lithium salt available in the art may be used.

Formula 3

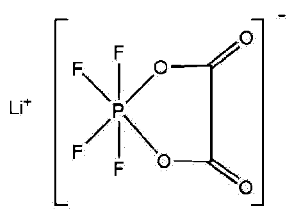

Formula 4

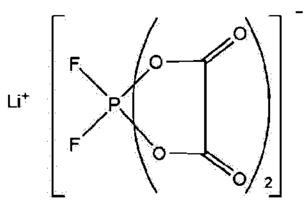

Formula 5 Formula 6

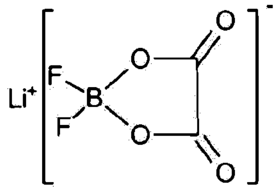
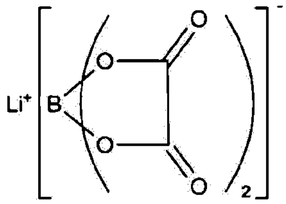

In the electrolyte, the concentration of the lithium salt may be from 0.01 M to 5.0 M, for example, from 0.05 M to 5.0 M, for example, from 0.1 M to 5.0 M, for example, from 0.1 M to 2.0 M. When the concentration of the lithium salt is within the above ranges, further improved characteristics of a lithium secondary battery may be achieved.

The organic solvent may be one or more selected from among a carbonate-based solvent, an ester-based solvent, an ether-based solvent, and a ketone-based solvent.

As the carbonate-based solvent, ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC) as carbonate-based solvents, ethylene carbonate (EC), butylene carbonate (BC), and the like may be used. As the ester-based solvent, methyl propionate, ethyl propionate, ethyl butyrate, methyl acetate, ethyl acetate, n-propyl acetate, dimethyl acetate, γ-butyrolactone, decanolide, γ-valerolactone, mevalonolactone, caprolactone, and the like may be used. As the ether-based solvent, dibutyl ether, tetraglyme, diglyme, dimethoxyethane, 2-methyltetrahydrofuran, tetrahydrofuran, and the like may be used. As the ketone-based solvent, cyclohexanone and the like may be used. As a nitrile-based solvent, acetonitrile (AN), succinonitrile (SN), adiponitrile, and the like may be used. Other available solvents include dimethyl sulfoxide, dimethylformamide, dimethylacetamide, tetrahydrofuran, and the like, but are not necessarily limited to the aforementioned components, and any organic solvent available in the art may be used. For example, the organic solvent may include a mixed solvent containing 50 vol% to 95 vol% of a chain carbonate and 5 vol% to 50 vol% of a cyclic carbonate, and may include, for example, a mixed solvent containing 70 vol% to 95 vol% of a chain carbonate and 5 vol% to 30 vol% of a cyclic carbonate. For example, the organic solvent may be a mixed solvent containing three or more types of organic solvents.

According to an embodiment, the organic solvent may include at least one selected from among ethyl methyl carbonate (EMC), methyl propyl carbonate, ethyl propyl carbonate, dimethyl carbonate (DMC), diethyl carbonate (DEC), dipropyl carbonate, propylene carbonate (PC), ethylene carbonate (EC), butylene carbonate, ethyl propionate, propyl propionate, ethyl butyrate, dimethyl sulfoxide, dimethylformamide, dimethylacetamide, γ-valerolactone, γ-butyrolactone, and tetrahydrofuran. However, without being limited to the aforementioned components, any material available as an organic solvent in the art may be used.

The electrolyte may be in a liquid state or a gel state. The electrolyte may be prepared by adding a lithium salt and the above-described additive to an organic solvent.

A lithium secondary battery according to another embodiment includes: a positive electrode including a positive electrode active material; a negative electrode including a negative electrode active material; and the above-described electrolyte positioned between the positive electrode and the negative electrode.

By including the above-described electrolyte additive for a lithium secondary battery, the lithium secondary battery may suppress an increase in the initial resistance of the lithium secondary battery, may suppress gas generation due to side reactions, and may have improved lifespan characteristics.

The positive electrode active material includes a lithium transition metal oxide including nickel and another transition metal. In the lithium transition metal oxide including nickel and another transition metal, the content of nickel may be 60 mol% or more, for example, 75 mol% or more, for example, 80 mol% or more, for example, 85 mol% or more, for example, 90 mol% or more, with respect to the total number of moles of transition metals.

For example, the lithium transition metal oxide may be a compound represented by Formula 7:

Formula 7 $Li_aNi_xCo_yM_zO_{2-b}A_b$

wherein in Formula 7, $1.0 \le a \le 1.2$, $0 \le b \le 0.2$, $0.6 \le x < 1$, $0 < y \le 0.4$, $0 < z \le 0.4$, and $x+y+z=1$, M may be at least one selected from the group consisting of manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A may be F, S, Cl, Br, or a combination thereof. For example, $0.7 \le x < 1$, $0 < y \le 0.3$, $0 < z \le 0.3$; $0.8 \le x < 1$, $0 < y \le 0.4$, $0 < z \le 0.4$; $0.8 \le x < 1$, $0 < y \le 0.2$, $0 < z \le 0.2$; $0.83 \le x < 0.97$, $0 < y \le 0.15$, and $0 < z \le 0.15$; or $0.85 \le x < 0.95$, $0 < y \le 0.1$, and $0 < z \le 0.1$ may be satisfied.

For example, the lithium transition metal oxide may be at least one of compounds represented by Formulas 4 and 5:

Formula 4 $LiNi_xCo_yMn_zO_2$

In Formula 4, $0.6 \leq x \leq 0.95$, $0<y \leq 0.4$, and $0<z \leq 0.4$ may be satisfied. For example, $0.7 \leq x \leq 0.95$, $0<y \leq 0.3$, and $0<z \leq 0.3$ may be satisfied.

Formula 5 $LiNi_xCo_yAl_zO_2$

In Formula 5, $0.6 \leq x \leq 0.95$, $0<y \leq 0.4$, and $0<z \leq 0.4$ may be satisfied. For example, $0.7 \leq x \leq 0.95$, $0<y \leq 0.3$, and $0<z \leq 0.3$ may be satisfied. For example, $0.8 \leq x \leq 0.95$ and $0<y \leq 0.2$, and $0<z \leq 0.2$ may be satisfied. For example, $0.82 \leq x0.95$, $0<y \leq 0.15$, and $0<z \leq 0.15$ may be satisfied. For example, $0.85 \leq x \leq 0.95$, $0<y \leq 0.1$, and $0<z \leq 0.1$ may be satisfied.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

According to another embodiment, the positive electrode active material may include at least one active material selected from among Li-Ni-Co-Al (NCA), Li-Ni-Co-Mn (NCM), lithium cobalt oxide ($LiCoO_2$), lithium manganese oxide ($LiMnO_2$), lithium nickel oxide ($LiNiO_2$), and lithium iron phosphate ($LiFePO_4$).

The negative electrode active material may include at least one selected from among a silicon-based compound, a carbon-based material, a composite of a silicon-based compound and a carbon-based compound, a silicon oxide ($SiO_x$, $0<x<2$), an alloy compound of silicon with another metal, and a lithium titanium compound (e.g., $Li_2TiO_3$). The silicon-based compound may be a silicon particle, a silicon alloy particle, and the like.

The silicon-based compound may have a size of less than 200 nm, for example, a size of 10 nm to 150 nm. The term "size" as used herein refers to an average particle diameter if silicon particles in the silicon-based compound is spherical, and refers to a major axis length if the silicon particles are non-spherical.

As excellent lifespan characteristics may be be achieved when the size of the silicon-based compound is within the above ranges, when using an electrolyte according to an embodiment, the lifespan of a lithium secondary battery may be further improved.

The carbon-based material may be, for example, a crystalline carbon, an amorphous carbon, or a mixture thereof. Examples of the crystalline carbon may include graphite, including artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like.

The composite of a silicon-based compound and a carbon-based compound may be a composite having a structure in which silicon nanoparticles are disposed on top of the carbon-based compound, a composite in which silicon particles are included on the surface and inside of the carbon-based compound, and a composite in which silicon particles are coated with the carbon-based compound and as such included inside the carbon-based compound. In the composite of a silicon-based compound and a carbon-based compound, the carbon-based compound may be graphite, graphene, a graphene oxide, or a combination thereof.

Examples of the composite of a silicon-based compound and a carbon-based compound may include an active material obtained by carbon-coating carbon-based compound particles after distributing thereon silicon nanoparticles having an average diameter of about 200 nm or less, an active material having silicon (Si) particles on top and inside of graphite, and the like. Secondary particles of the composite of a silicon-based compound and a carbon-based compound may have an average particle diameter of 5 $\mu$m to 20 $\mu$m. The silicon nanoparticles may have an average particle diameter of 5 nm or more, for example, 10 nm or more, for example, 20 nm or more, for example, 50 nm or more, or for example, 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be from 100 nm to 150 nm.

The average particle diameter of secondary particles of the composite of a silicon-based compound and a carbon-based compound may be from 5 $\mu$m to 18 $\mu$m, for example, from 7 $\mu$m to 15 $\mu$m, or for example, from 10 $\mu$m to 13 $\mu$m.

As other examples of the composite of a silicon-based compound and a carbon-based compound, the porous silicon composite cluster disclosed in Korean Application Publication No. 10-2018-0031585, and the porous silicon composite cluster structure disclosed in Korean Application Publication No. 10-2018-0056395 may be used. Korean Application Publication No. 10-2018-0031586 and Korean Application Publication No. 10-2018-0056395 are incorporated by reference herein.

A silicon-carbon-based compound composite according to an embodiment may be a porous silicon composite cluster containing a porous core and a shell, the core including a porous silicon composite secondary particle and the

shell including second graphene disposed on the core, wherein the porous silicon composite secondary particle includes an aggregate of two or more silicon composite primary particles, wherein the silicon composite primary particles may include silicon; a silicon oxide ($SiO_x$) (O<x<2) positioned on the silicon; and first graphene positioned on the silicon oxide.

According to another embodiment, a silicon-carbon-based compound composite may include: a porous silicon composite cluster containing a porous silicon composite secondary particle, and a second carbon flake on at least one surface of the porous silicon composite secondary particle; and a carbon-based coating film including an amorphous carbon, positioned on the porous silicon composite cluster, wherein the porous silicon composite secondary particle includes an aggregate of two or more silicon composite primary particles, wherein the silicon composite primary particles may include silicon; a silicon oxide ($SiO_x$) (O<x<2) disposed on at least one surface of the silicon; and a first carbon flake on at least one surface of the silicon oxide, wherein the silicon oxide is present in the state of a film, a matrix, or a combination thereof.

The first carbon flake and second carbon flake may each be present in the state of a film, a particle, a matrix, or a combination thereof. The first carbon flake and second carbon flake may each be graphene, graphite, carbon fibers, graphene oxide, or the like.

The composite of a silicon-based compound and a carbon-based compound may be a composite having a structure in which silicon nanoparticles are positioned on top of the carbon-based compound, a composite in which silicon particles are included on the surface and inside of the carbon-based compound, and a composite in which silicon particles are coated with the carbon-based compound and thus included inside the carbon-based compound. In the composite of a silicon-based compound and a carbon-based compound, the carbon-based compound may be graphite, graphene, a graphene oxide, or a combination thereof.

The lithium secondary battery is not limited to any particular type and may include a lithium ion battery, a lithium ion polymer battery, a lithium sulfur battery, and the like.

The lithium secondary battery may be prepared as follows.

First, a positive electrode may be prepared.

For example, a positive electrode active material composition containing a mixture of a positive electrode active material, a conductive material, a binder, and a solvent may be prepared. The positive electrode active material composition may be directly coated on a metal current collector to thereby form a positive electrode plate. Alternatively, the positive electrode active material composition may be cast on a separate support, and a film exfoliated from the support may be laminated on a metal current collector to thereby form a positive electrode plate. The positive electrode is not limited to the aforementioned types, and may be a type other than the aforementioned types.

For the positive electrode active material, any lithium-containing metal oxide commonly available in the art may be used without limitations. For example, the positive electrode active material may utilize at least one composite oxide of lithium with a metal selected from among cobalt, manganese, nickel, and a combination thereof. As a specific example, a compound represented by any one of the following formulas may be used: $Li_aA_{1-b}B^1_bD^1_2$ (in the formula, $0.30 \le a \le 1.8$ and $0 \le b \le 0.5$); $Li_aE_{1-b}B^1_bO_{2-c}D^1_c$ (in the formula, $0.30 \le a \le 1.8$, $0 \le b \le 0.5$, and $0 \le c \le 0.05$); $LiE_{2-b}B^1_bO_{4-c}D^1_c$ (in the formula, $0 \le b \le 0.5$ and $0 \le c \le 0.05$); $Li_aNi_{1-b-c}Co_bB^1_cD^1_\alpha$ (in the formula, $0.30 \le a \le 1.8$, $0 \le b \le 0.5$, $0 \le c \le 0.05$, and $0 < \alpha \le 2$); $Li_aNi_{1-b-c}Co_bB^1_cO_{2-\alpha}F^1_\alpha$ (in the formula, $0.30 \le a \le 1.8$, $0 \le b \le 0.5$, $0 \le c \le 0.05$, and $0 < \alpha < 2$); $Li_aNi_{1-b-c}Co_bB^1_cO_{2-\alpha}F^1_2$ (in the formula, $0.30 \le a \le 1.8$, $0 \le b \le 0.5$, $0 \le c \le 0.05$, and $0 < \alpha < 2$); $Li_aNi_{1-b-c}Mn_bB^1_cD_\alpha$ (in the formula, $0.30 \le a \le 1.8$, $0 \le b \le 0.5$, $0 \le c \le 0.05$, and $0 < \alpha \le 2$); $Li_aNi_{1-b-c}Mn_bB^1_cO_{2-\alpha}F^1_\alpha$ (in the formula, $0.30 \le a \le 1.8$, $0 \le b \le 0.5$, $0 \le c \le 0.05$, and $0 < \alpha < 2$); $Li_aNi_{1-b-c}Mn_bB^1_cO_{2-\alpha}F^1_2$ (in the formula, $0.30 \le a \le 1.8$, $0 \le b \le 0.5$, $0 \le c \le 0.05$, and $0 < a < 2$); $Li_aNi_bE_cG_dO_2$ (in the formula, $0.30 \le a \le 1.8$, $0 \le b \le 0.9$, $0 \le c \le 0.5$, and $0.001 \le d \le 0.1$); $Li_aNi_bCo_cMn_dGeO_2$ (in the formula, $0.30 \le a \le 1.8$, $0 \le b \le 0.9$, $0 \le c \le 0.5$, $0 \le d \le 0.5$, and $0.001 \le e \le 0.1$.); $Li_aNiG_bO_2$ (in the formula, $0.30 \le a \le 1.8$ and $0.001 \le b \le 0.1$); $Li_aCoG_bO_2$ (in the formula, $0.30 \le a \le 1.8$ and $0.001 \le b \le 0.1$); $Li_aMnG_bO_2$ (in the formula, $0.30 \le a \le 1.8$ and $0.001 \le b \le 0.1$); $Li_aMn_2G_bO_4$ (in the formula, $0.30 \le a \le 1.8$ and $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the formulas above, A may be Ni, Co, Mn, or a combination thereof; $B^1$ may be Al, Ni, Co, Mn, Cr, Fe, Mg, Sr, V, a rare-earth element, or a combination thereof; $D^1$ may be O, F, S, P, or a combination thereof; E may be Co, Mn, or a combination thereof; $F^1$ may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, the positive electrode active material may be $LiCoO_2$, $LiMn_xO_{2x}$(x=1, 2), $LiNi_{1-x}Mn_xO_{2x}$(0<x<1), $LiNi_{1-x-y}Co_xMn_yO_2$ ($0 \le x \le 0.5$, $0 \le y \le 0.5$), $LiFePO_4$, or the like.

Needless to say, any of the aforementioned compounds with a coating layer on a surface thereof may be used, or a mixture of any one of the aforementioned compounds and a compound having a coating layer may also be used. This coating layer may include a coating element compound, such as an oxide and a hydroxide of a coating element, oxyhydroxide of a coating element, an oxycarbonate of a coating element, and a hydroxycarbonate of a coating element. A compound forming these coating layers may be amorphous or crystalline. The coating element included in the coating

layer may include Mg, Al, Co, K, Na, Ca, Si, Ti, V, Sn, Ge, Ga, B, As, Zr, or a mixture thereof. For the process of forming the coating layer, any coating method that is capable of coating the above compound by using such elements, without adversely affecting the physical properties of positive electrode active material may be used without limitation (e.g., spray coating, precipitation, etc.). Such methods are well- understood by those skilled in the art, and therefore will not be described in further detail.

Examples of the conductive material include carbon black, graphite powder, and the like. However, the conductive material is not limited to the aforementioned components and may be any conductive material available in the art.

For the binder, a vinylidene fluoride/hexafluoropropylene copolymer, polyvinylidene fluoride (PVDF), polyacrylonitrile, polymethyl methacrylate, polytetrafluoroethylene, and a mixture thereof, or a styrene butadiene rubber-based polymer, etc. may be used. However, the binder is not limited to the aforementioned components and may be any binder available in the art.

For the solvent, N-methyl pyrrolidone, acetone, or water, etc. may be used. However, the solvent is not limited to the aforementioned components and may be any solvent available in the art.

The content of each of the positive electrode active material, the conductive material, the binder, and the solvent may be at a level that is commonly used in lithium batteries. Depending on the use and configuration of a lithium battery, one or more of the conductive material, the binder, and the solvent may be omitted.

Next, a negative electrode may be prepared.

For example, a negative electrode active material composition may be prepared by combining a negative electrode active material, a conductive material, a binder, and a solvent. The negative electrode active material composition may be directly coated and dried on a metal current collector to thereby form a negative electrode plate. Alternatively, the negative electrode active material composition may be cast on a separate support, and a film exfoliated from the support may be laminated on a metal current collector to thereby form a negative electrode plate.

The negative electrode active material may be any material available in the art as a negative electrode active material of a lithium battery. For example, the negative electrode active material may include one or more selected from among lithium metal, a metal alloyable with lithium, a transition metal oxide, a non-transition metal oxide, and a carbon-based material.

Examples of the metal alloyable with lithium may include Si, Sn, Al, Ge, Pb, Bi, Sb, a Si-Y alloy (wherein Y is an alkali metal, an alkaline earth metal, an element in Group 13, an element in Group 14, a transition metal, a rare-earth metal, or a combination thereof, but not Si), a Sn-Y alloy (wherein Y is an alkali metal, an alkaline earth metal, an element in Group 13, an element in Group 14, a transition metal, a rare-earth metal, or a combination thereof, but not Sn), and the like. Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may be a lithium titanium oxide, a vanadium oxide, a lithium vanadium oxide, and the like.

For example, the non-transition metal oxide may be $SnO_2$, $SiO_x$ ($0<x<2$), and the like.

The carbon-based material may be, for example, a crystalline carbon, an amorphous carbon, or a mixture thereof. Examples of the crystalline carbon may include graphite, including artificial graphite or natural graphite in shapeless, plate, flake, spherical or fiber form, and examples of the amorphous carbon may include soft carbon (low-temperature calcined carbon) or hard carbon, mesophase pitch carbides, calcined cokes, and the like.

The negative electrode active material composition may utilize the same conductive material and binder as in the positive electrode active material composition above.

The negative electrode active material, the conductive material, the binder, and the solvent are each used in an amount commonly used in lithium batteries. Depending on the use and configuration of a lithium battery, one or more of the conductive material, the binder, and the solvent may be omitted.

Next, a separator to be positioned between the positive electrode and the negative electrode may be prepared.

For the separator, any separator commonly used in lithium batteries may be utilized. Any separator capable of retaining a large quantity of electrolyte solution while exhibiting low resistance to ion migration in the electrolyte solution may be used. For example, the separator may be any material selected from among glass fiber, polyester, Teflon, polyethylene, polypropylene, polytetrafluoroethylene (PTFE), and a combination thereof. In addition, the separator may be in the form of nonwoven fabric or woven fabric. For example, a lithium ion battery may include a rollable separator formed of polyethylene, polypropylene, or the like, and a lithium ion polymer battery may include a separator which has an excellent impregnation ability with respect to an organic electrolyte solution. For example, the separator may be prepared as follows.

A separator composition may be prepared by mixing a polymer resin, a filler, and a solvent. The separator composition may be directly coated and dried on top of an electrode to thereby form a separator. Alternatively, the separator composition may be cast and dried on a support, and a separator film exfoliated from the support may be laminated on top of an electrode to thereby form a separator.

The polymer resin for use in the preparation of the separator above is not limited to any particular material, and

any material used for a binder of an electrode may be used. For example, a vinylidene fluoride/hexafluoropropylene copolymer, polyvinylidene fluoride (PVDF), polyacrylonitrile, polymethyl methacrylate, or a mixture thereof may be used as the polymer resin.

Next, the above-described electrolyte solution may be prepared.

As shown in FIG. 1, a lithium battery 1 includes a positive electrode 3, a negative electrode 2, and a separator 4. The positive electrode 3, the negative electrode 2, and the separator 4 may be wound or folded so as to be accommodated in a battery case 5. Then, the battery case 5 may be injected with an organic electrolyte solution and sealed with a cap assembly 6 to thereby form a lithium secondary battery 1. The battery case may be a cylindrical type, a rectangular type, a thin-film type, and the like. For example, the lithium battery may be a large-scale thin film-type battery. The lithium battery may be a lithium ion battery.

A separator may be disposed between the positive electrode and the negative electrode, to thereby form a battery structure. The battery structures may be laminated in a bi-cell structure, and immersed in a liquid organic electrolyte, and the resulting product may be accommodated and sealed in a pouch, to thereby form a lithium-ion polymer battery.

In addition, a plurality of the battery structures may be stacked together to form a battery pack, and such a battery pack may be used in any and all devices that require high capacity and high output. For example, such a battery pack may be used in a laptop computer, a smartphone, an electric vehicle, and the like.

A lithium secondary battery according to an embodiment has a significantly reduced DCIR increase compared to lithium secondary batteries employing a common nickel-rich lithium nickel composite oxide as the positive electrode active material, and thus may achieve excellent battery characteristics.

A lithium secondary battery employing the positive electrode, negative electrode, and electrolyte may have a driving voltage that has a lower limit of 2.5 V to 2.8 V, and an upper limit of 4.1 V or more, for example, of 4.1 V to 4.45 V.

In addition, the lithium secondary battery may be used in, without being limited to: power tools operated by electric motors; electric vehicles including an electric vehicle (EV), a hybrid electric vehicle (HEV), a plug-in hybrid electric vehicle (PHEV), and the like; electric two-wheeled vehicles including an electric bicycle (E-bike), an electric scooter (Escooter), and the like; an electric golf cart; and power storage systems and the like.

The term "alkyl group" as used herein refers to a branched or unbranched aliphatic hydrocarbon group. In an embodiment, an alkyl group may be unsubstituted and substituted. Examples of the alkyl group include, without being limited to a methyl group, an ethyl group, a propyl group, an isopropyl group, a butyl group, an isobutyl group, tert-butyl group, a pentyl group, a hexyl group, a cyclopropyl group, a cyclopentyl group, a cyclohexyl group, a cycloheptyl group, and the like, and the alkyl group may be optionally substituted in other embodiments. In another embodiment, an alkyl group may contain 1 to 6 carbon atoms. For examples, an alkyl group having 1 to 6 carbon atoms may be a methyl group, an ethyl group, a propyl group, an isopropyl group, a butyl group, an iso-butyl group, a sec-butyl group, a pentyl group, a 3-pentyl group, a hexyl group, and the like, but is not necessarily limited thereto.

One or more hydrogen atoms in the alkyl group may be substituted with a halogen atom, a $C_1$-$C_{20}$ alkyl group (examples: $CF_3$, $CHF_2$, $CH_2F$, $CCl_3$, etc.), $C_1$-$C_{20}$ alkoxy group, $C_2$-$C_{20}$ alkoxyalkyl group, a hydroxy group, a nitro group, a cyano group, an amino group, an amidino group, hydrazine, hydrazone, carboxylic group or a salt thereof, a sulfonyl group, a sulfamoyl group, a sulfonate group or a salt thereof, phosphorus acid or a salt thereof, or a $C_1$-$C_{20}$ alkyl group, a $C_2$-$C_{20}$ alkenyl group, a $C_2$-$C_{20}$ alkynyl group, a $C_1$-$C_{20}$ heteroalkyl group, a $C_6$-$C_{20}$ aryl group, a $C_7$-$C_{20}$ arylalkyl group, a $C_6$-$C_{20}$ heteroaryl group, a $C_7$-$C_{20}$ hetero aryl alkyl group, a $C_6$-$C_{20}$ heteroaryloxy group, or a $C_6$-$C_{20}$ heteroaryloxyalkyl group.

In the present specification, "alkenyl group" refers to a hydrocarbon group having 2 to 20 carbon atoms and including at least one carbon-carbon double bond, and includes but is not limited to, an ethenyl group, 1-propenyl group, 2-propenyl group, 2-methyl-1-propenyl group, 1-butenyl group, 2-butenyl group, a cyclopropenyl group, a cyclopentenyl, a cyclohexenyl group, a cyclopentenyl group, and the like. In another embodiment, an alkenyl group may be substituted or unsubstituted. In another embodiment, the number of carbon atoms in an alkenyl group may be 2 to 40.

In the present specification, the term "alkynyl group" refers to a hydrocarbon group having 2 to 20 carbon atoms and including at least one carbon-carbon triple bond, and includes but is not limited to, an ethynyl group, 1-propynyl group, 1-butynyl group, 2-butynyl group, and the like. In another embodiment, the alkynyl group may be substituted or unsubstituted. In another embodiment, the alkynyl group may have 2 to 40 carbon atoms.

As used herein, a substituent group is derived from an unsubstituted parent group, of which one or more hydrogen atoms are substituted with a different atom or functional group. Unless otherwise indicated, when a functional group is described as being "substituted", this means that the functional group is substituted with one or more substituents, each independently selected from the group consisting of a $C_1$-$C_{20}$ alkyl group, a $C_2$-$C_{20}$ alkenyl group, a $C_2$-$C_{20}$ alkynyl group, a $C_1$-$C_{20}$ alkoxy group, a halogen, a cyano group, a hydroxy group, and a nitro group. If a functional group is described as being "optionally substituted", the functional group may be substituted with any one of the aforementioned substituents.

The term "halogen" as used herein includes fluorine, bromine, chlorine, iodine, and the like.

"Alkoxy" refers to "alkyl-O-", wherein the alkyl is as described above. Examples of the alkoxy group include a methoxy group, an ethoxy group, a 2-propoxy group, a butoxy group, a t-butoxy group, a pentyloxy group, a hexyloxy group, and the like. One or more hydrogen atoms in the alkoxy group may be substituted with the same substituents as described above with respect to the alkyl group.

"Heteroaryl" refers to a monocyclic or bicyclic organic group containing one or more heteroatoms selected from among N, O, P, and S, wherein the rest of ring atoms are carbon. The heteroaryl group may include, for example, 1-5 heteroatoms, and may include 5-10 ring members. The S or N may be oxidized to have various oxidation states.

Examples of "heteroaryl" include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl group, 1,2,3-thiadiazolyl, 1,2,4-thiadiazolyl, 1,2,5- thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, and 5-pyrimidin-2-yl.

The term "heteroaryl" includes cases in which a hetero aromatic ring is optionally fused with at least one aryl, cycloaliphatic, or heterocycle.

The term "carbon ring" refers to a saturated or partially unsaturated non-aromatic monocyclic, bicyclic, or tricyclic hydrocarbon group.

Examples of the monocyclic hydrocarbon include a cyclopentyl group, a cyclopentenyl group, a cyclohexyl group, a cyclohexenyl group, and the like.

Examples of the bicyclic hydrocarbon may include bornyl, decahydronaphthyl, bicyclo[2.1.1]hexyl, bicyclo[2.2.1]heptyl, bicyclo[2.2.1]heptenyl, or bicyclo[2.2.2]octyl.

Examples of the tricyclic hydrocarbon may include adamantyl and the like.

One or more hydrogen atoms in the carbon ring may be substituted with the substituents as described above with respect to the alkyl group.

The present disclosure will be described in greater detail through Examples and Comparative Examples below. However, it will be understood that the Examples are only for illustrating the present disclosure, and are not to be construed as limiting the scope of the present disclosure.

(Preparation of Lithium Secondary Battery)

Example 1

1.15 M $LiPF_6$ was added to a mixed solvent containing ethylene carbonate (EC), ethyl methyl carbonate (EMC), and dimethyl carbonate (DMC) in a volume ratio of 2:4:4. Then, with respect to the total weight of the electrolyte, 0.5 wt% of the isocyanate-based compound represented by Formula 2-1 and 1 wt% of fluoroethylene carbonate (FEC) were added to the resulting mixture, thereby completing the preparation of an electrolyte for a lithium secondary battery.

Formula 2-1

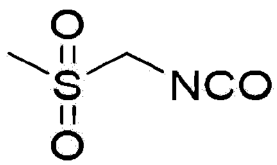

97 wt% of $LiNi_{0.8}Co_{0.1}Al_{0.1}O_2$ as a positive electrode active material, 0.5 wt% of artificial graphite powder as a conductive material, 0.8 wt% of carbon black, and 1.7 wt% of polyvinylidene fluoride (PVdF) were mixed together and introduced into N-methyl-2-pyrrolidone, and then stirred for 4 hours using a mechanical stirrer, to thereby form a positive electrode active material slurry. Using a coater, the slurry was uniformly coated on an aluminum current collector having a thickness of 12 μm and then dried by hot air at 100 °C. After the drying, the slurry was roll-pressed to prepare a positive electrode.

87 wt% of artificial graphite as a negative electrode active material, 10.5 wt% of a silicon composite, 1.5 wt% of SBR, and 1 wt% of CMC were mixed together and dispersed in water, to thereby form a negative electrode active material slurry. Using a coater, the slurry was uniformly coated on a copper current collector having a thickness of 10 μm in a continuous manner, and then dried by hot air at 100 °C. The slurry was roll-pressed to prepare a negative electrode.

Using the positive electrode and negative electrode prepared above, a polyethylene separator having a thickness of 14 μm, and the electrolyte, a cylindrical lithium secondary battery was prepared.

Example 2

A lithium secondary battery was prepared following the same process as Example 1, except that the electrolyte had added thereto vinylene carbonate (VC) instead of fluoroethylene carbonate (FEC) as in Example 1.

Example 3

A lithium secondary battery was prepared following the same process as Example 1, except that the electrolyte had added thereto vinyl ethylene carbonate (VEC) instead of fluoroethylene carbonate (FEC) as in Example 1.

Example 4

A lithium secondary battery was prepared following the same process as Example 1, except that the electrolyte used had added thereto an isocyanate-based compound represented by Formula 3-1 instead of the isocyanate-based compound represented by Formula 2-1 as in Example 1.

Formula 3-1

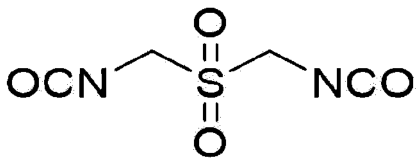

Example 5

A lithium secondary battery was prepared following the same process as Example 4, except that the electrolyte used had added thereto vinylene carbonate (VC) instead of fluoroethylene carbonate (FEC) as in Example 4.

Example 6

A lithium secondary battery was prepared following the same process as Example 4, except that the electrolyte used had added thereto vinyl ethylene carbonate (VEC) instead of fluoroethylene carbonate (FEC) as in Example 4.

Comparative Example 1

A lithium secondary battery was prepared following the same process as Example 1, except that the electrolyte used contained no additives added thereto.

Comparative Example 2

A lithium secondary battery was prepared following the same process as Example 1, except that an electrolyte containing 0.5 wt% of an isocyanate-based compound represented by Formula 2-1 alone as an additive was used.

Comparative Example 3

A lithium secondary battery was prepared following the same process as Example 1, except that an electrolyte containing 0.5 wt% of an isocyanate-based compound represented by Formula 3-1 alone as an additive was used.

Comparative Example 4

A lithium secondary battery was prepared following the same process as Example 1, except that 1 wt% of fluoroethylene carbonate (FEC) alone was used as an additive.

Comparative Example 5

A lithium secondary battery was prepared following the same process as Example 1, except that 1 wt% of

vinylene carbonate (VC) alone was used as an additive.

Comparative Example 6

A lithium secondary battery was prepared following the same process as Example 1, except that 1 wt% of vinyl ethylene carbonate (VEC) alone was used as an additive.

Comparative Example 7

A lithium secondary battery was prepared following the same process as Example 1, except that 1.5 wt% of an isocyanate-based compound represented by Formula 3-1 and 1 wt% of fluoroethylene carbonate (FEC) were used as additives.

Comparative Example 8

A lithium secondary battery was prepared following the same process as Example 1, except that 1.5 wt% of an isocyanate-based compound represented by Formula 3-1 and 1 wt% of vinylene carbonate (VC) were used as additives.

Comparative Example 9

A lithium secondary battery was prepared following the same process as Example 1, except that 1.5 wt% of an isocyanate-based compound represented by Formula 3-1 and 1 wt% of vinyl ethylene carbonate (VEC) were used as additives.

Reference Example 1

A lithium secondary battery was prepared following the same process as Example 1, except that 0.5 wt% of an isocyanate-based compound represented by Formula 3-1 and 7 wt% of vinylene carbonate (VC) were used as additives.

Reference Example 2

A lithium secondary battery was prepared following the same process as Example 1, except that 0.5 wt% of an isocyanate-based compound represented by Formula 3-1 and 7 wt% of vinyl ethylene carbonate (VEC) were used as additives.

Evaluation Example 1: Evaluation on Initial DC-IR at Room Temperature (25 °C) and DC-IR Increase after High-Temperature Storage

Lithium secondary batteries prepared in Examples 1-6 and Comparative Examples 1-6 were each tested under the conditions of 25 °C and 1 C/10 sec. discharge (SOC 100), and initial DC-IRs were calculated from $\Delta V/\Delta I$ (change in voltage/change in current) values with respect to the lithium secondary batteries prior to high-temperature storage in an oven at 60 °C. The results thereof are shown in Table 1 below. Also, after measuring initial DC-IRs, each battery was stored at a high temperature (60 °C) for 60 days and then measured for resistance to calculate DC-IR change (%) according to Equation 1 below.

Equation 1

$$\text{DC-IR Change} = [\text{DCIR}(60\text{d.})-\text{DCIR}(0\text{d.})]/\text{DCIR}(0\text{d.}) \times 100\%$$

In Equation 1, DCIR(60d.) represents DCIR after 60 days, and DCIR(0d.) represents DCIR right before the storage.

The results of the measurement of initial DC-IR, DC-IR after high-temperature storage, and resistance change are shown in Table 1.

Evaluation Example 2: Evaluation on Fast-Charge Lifespan Resistance Increase

The lithium secondary batteries prepared in Examples 1-6 and Comparative Examples 1-6 were each charged up to 80% SOC (state of charge) at 25 °C for 15 minutes by changing the current level in 3 steps, and then subjected to a normal discharge process to measure fast-charge life capacity decrease and resistance increase. The results of the measurement are shown in Table 1 below.

Evaluation Example 3: Evaluation on Room-Temperature (25 °C) Lifespan Characteristics and Resistance Increase

The lithium batteries prepared in Examples 1-6 and Comparative Examples 1-6 were each charged at a constant current of 0.5 C rate at 25 °C until the voltage reached 4.2 V and then, the charging was cut-off at a current of 0.05 C rate while maintaining a constant voltage mode at 4.2 V. Subsequently, each battery was discharged at a constant current of 0.5 C rate until the voltage reached 3 V during discharge.
This charge-discharge cycle was repeated 120 times.
Throughout the charge-discharge cycles above, a rest period of 10 minutes was provided after each charge/discharge cycle.
Lifespan characteristics at room temperature were evaluated as capacity retention ratio at the $120^{th}$ cycle, and the results thereof are shown in Table 1. Capacity retention ratio at the $120^{th}$ cycle is defined by Equation 2 below.

Equation 2

Capacity retention ratio = [0.2 C discharge capacity at $120^{th}$ cycle / 0.2 C discharge capacity at $1^{st}$ cycle] × 100

In addition, resistance increases after the $120^{th}$ charge-discharge cycle at room temperature were evaluated, and the results thereof are shown in Table 1.

Evaluation Example 4: Evaluation on High-Temperature (60 °C) Lifespan Characteristics and Resistance Increase

Except that the charging and discharging of the lithium secondary batteries prepared in Examples 1-6 and Comparative Examples 1-6 were carried out at 45 °C, the process of charging and discharging, and the evaluation of lifespan characteristics and resistance increases at a high temperature were carried out in the same manner as described with respect to Evaluation Example 4 above, and the results thereof are shown in Table 1.

Evaluation Example 5: Evaluation on Usage Time at -30 °C

After charging each of the lithium batteries prepared in Examples 1-6 and Comparative Examples 1-5 to SOC 100% at room temperature, the oven temperature was lowered to -30 °C, followed by waiting for 4 hours, and the duration of time for which the voltage reached 2.7 V with 0.5 C was measured. The results thereof are shown in Table 1.

[Table 1]

| Item | Additive (wt%) | | Initial DCIR (mΩ) | 25 °C Roomtemperature lifespan (120 cycles) Resista nce increas e (%) | 45 °C Lifespan (120 cycles) Resista nce increas e (%) | 60 °C Storage Resista nce increase (%) | 15 min Fast-chargin 9 lifespan Resistance increase | -30 °C Usage time (sec) | 45 °C Lifespan (120 cycles) Capacity retention rate (%) |
|---|---|---|---|---|---|---|---|---|---|
| | Isocyan ate-based additive | Carbo nate-based additive | | | | | | | |
| Comparative Example 1 | - | - | 21.4 | 11 | 19 | 20 | 14 | 14 | 92 |
| Comparative Example 2 | Formula 2-1 0.5 wt% | - | 21.3 | 9 | 17 | 18 | 9 | 14 | 92 |
| Comparative Example 3 | Formula 3-1 0.5 wt% | | 21.3 | 9 | 14 | 16 | 11 | 14 | 92 |
| Comparative Example 4 | - | FEC 1 wt% | 21.5 | 11 | 17 | 22 | 15 | 9 | 92 |
| Comparative Example 5 | - | VC 1 wt% | 22.1 | 12 | 18 | 21 | 15 | 8 | 92 |
| Comparative Example 6 | - | VEC 1 wt% | 23.0 | 12 | 19 | 20 | 25 | 6 | 92 |
| Example 1 | Formula 2-1 0.5 wt% | FEC 1 wt% | 21.3 | 9 | 18 | 17 | 11 | 17 | 94 |
| Example 2 | Formula 2-1 0.5 wt% | VC 1 wt% | 21.4 | 8 | 17 | 17 | 10 | 17 | 95 |
| Example 3 | Formula 2-1 0.5 wt% | VEC 1 wt% | 21.4 | 10 | 17 | 18 | 13 | 14 | 93 |
| Example 4 | Formula 3-1 0.5 wt% | FEC 1 wt% | 21.3 | 8 | 17 | 15 | 11 | 15 | 93 |

(continued)

| Item | Additive (wt%) | | Initial DCIR (mΩ) | 25 °C Roomtemperature lifespan (120 cycles) Resista nce increas e (%) | 45 °C Lifespan (120 cycles) Resista nce increas e (%) | 60 °C Storage Resista nce increase (%) | 15 min Fast-chargin 9 lifespan Resistance increase | -30 °C Usage time (sec) | 45 °C Lifespan (120 cycles) Capacity retention rate (%) |
|---|---|---|---|---|---|---|---|---|---|
| | Isocyan ate-based additive | Carbo nate-based additive | | | | | | | |
| Example 5 | Formula 3-1 0.5 wt% | VC 1 wt% | 21.3 | 8 | 14 | 15 | 12 | 15 | 93 |
| Example 6 | Formula 3-1 0.5 wt% | VEC 1 wt% | 21.3 | 9 | 15 | 16 | 12 | 14 | 92 |

As shown in Table 1, the lithium secondary batteries of Examples 1-6, by using an electrolyte including a combination of an isocyanate-based additive and a carbonate-based additive, were found to show reduced resistance increases and improved lifespan characteristics at room temperature and at a high temperature, and also improved fast-charging resistance and high-temperature storage resistance characteristics, compared to Comparative Examples that contain only one of the two additives. This result shows that the lithium secondary batteries of Examples 1-6 may have improved long-term durability and lifespan characteristics, compared to Comparative Examples.

Evaluation Example 6: Evaluation on Performance by Range of Additive Content

To confirm the effect of the mixing ratio of the isocyanate-based additive and the carbonate-based additive, lithium secondary batteries were prepared following the same process as Example 1 above, while varying the content of additive as shown in Table 2 below.

The lithium secondary batteries thus prepared were each evaluated for performance in the same manner described with respect to Evaluation Examples 1 to 5, and the results thereof are shown in Table 2.

[Table 2]

| Item | Additive (wt%) | | Initial DCIR (mQ) | 25 °C Roomtemperature lifespan (120 cycles) Resistance increase (%) | 45 °C Lifespan (120 cycles) Resistance increase (%) | 60 °C Storage Resistance increase (%) | 15 min Fastchargin 9 lifespan Resistance increase | -30 °C Usage time (sec) | 45 °C Lifespan (120 cycles) Capacity retention rate (%) |
|---|---|---|---|---|---|---|---|---|---|
| | Isocyanate-based additive | Carbonate-based additive | | | | | | | |
| Comparative Example 7 | Formula 3-1 1.5 wt% | FEC 1 wt% | 16.4 | 12 | 19 | 29 | 15 | 8 | 87 |
| Comparative Example 8 | Formula 3-1 1.5 wt% | VC 1 wt% | 16.5 | 13 | 18 | 41 | 16 | 6 | 91 |
| Comparative Example 9 | Formula 3-1 1.5 wt% | VEC 1 wt% | 17 | 13 | 19 | 44 | 26 | 6 | 92 |
| Reference Example 1 | Formula 3-1 0.5 wt% | VC 7 wt% | 31.0 | 8 | 19 | 26 | 13 | 2 | 92 |
| Reference Example 2 | Formula 3-1 0.5 wt% | VEC 7 wt% | 37.9 | 8 | 17 | 23 | 21 | 0 | 92 |

As shown in Table 2, it was found that when the mixing ratio of an isocyanate-based additive and a carbonate-based additive departs from the ranges disclosed herein, one or more of the properties evaluated were unsuitable.

Although one or more embodiments have been described with reference to the drawings and examples, these embodiments are merely exemplary, and those skilled in the art shall understand that various modifications and equivalent other embodiments are possible therefrom. Accordingly, the scope of the present inventive concept shall be defined by the appended claims.

## Claims

1. An electrolyte for a lithium secondary battery, the electrolyte comprising:

   a lithium salt; an organic solvent; and an additive,
   wherein the additive comprises an isocyanate-based additive and a carbonate-based additive,
   wherein a ratio of a weight of the carbonate-based additive to a weight of the isocyanate-based additive is greater than 1.

2. The electrolyte of claim 1, wherein a ratio of a weight of the carbonate-based additive to a weight of the isocyanate-based additive is from greater than 1 to 20 or less.

3. The electrolyte of claim 1, wherein a mixing weight ratio of the isocyanate-based additive and the carbonate-based additive is in a range of 1 : 2 to 1 : 6.

4. The electrolyte of claim 1, wherein the isocyanate-based additive is represented by Formula 1:

   Formula 1

   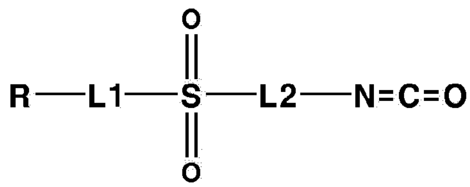

   wherein in Formula 1,

   L1 and L2 each independently are an unsubstituted or substituted $C_1$-$C_{30}$ alkylene group,
   R is hydrogen, -F, -Cl, -Br, -I, an isocyanate(-N=C=O) group, a $-CF_3$ group, a cyano group, a nitro group, an amidino group, a hydrazino group, a hydrazono group, an unsubstituted or substituted $C_1$-$C_{20}$ alkyl group, an unsubstituted or substituted $C_2$-$C_{20}$ alkenyl group, an unsubstituted or substituted $C_2$-$C_{20}$ alkynyl group, an unsubstituted or substituted $C_1$-$C_{20}$ alkoxy group, $-Si(Q_1)(Q_2)(Q_3)$, $-N(Q_1)(Q_2)$, $-B(Q_1)(Q_2)$, $-C(=O)(Q_1)$, $-S(=O)_2(Q_1)$, or $-P(=O)(Q_1)(Q_2)$,
   wherein at least one substituent in the substituted $C_1$-$C_{30}$ alkylene group, the substituted $C_1$-$C_{20}$ alkyl group, the substituted $C_2$-$C_{20}$ alkenyl group, the substituted $C_2$-$C_{20}$ alkynyl group, and the substituted $C_1$-$C_{20}$ alkoxy group is selected from among deuterium, -F, -Cl, -Br, -I, a hydroxyl group, a cyano group, a nitro group, an amidino group, a hydrazino group, a hydrazono group, a $C_1$-$C_{10}$ alkyl group, a $C_2$-$C_{10}$ alkenyl group, a $C_2$-$C_{10}$ Alkynyl group, and a $C_1$-$C_{20}$ alkoxy group, and
   $Q_1$ to $Q_3$ each independently are selected from among hydrogen, deuterium, -F, - Cl, -Br, -I, a hydroxyl group, a cyano group, a nitro group, an amidino group, a hydrazino group, a hydrazono group, a $C_1$-$C_{20}$ alkyl group, a $C_2$-$C_{20}$ alkenyl group, a $C_2$-$C_{20}$ alkynyl group, and a $C_1$-$C_{20}$ alkoxy group.

5. The electrolyte of claim 4, wherein in Formula 1, R is hydrogen or an isocyanate(-N=C=O) group.

6. The electrolyte of claim 1, wherein the isocyanate-based additive comprises a compound represented by Formula 2:

Formula 2

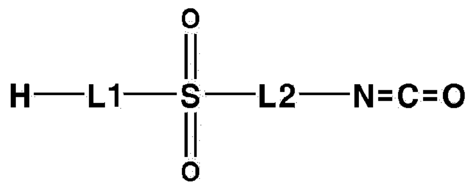

wherein in Formula 2,
L1 and L2 each independently are an unsubstituted $C_1$-$C_{30}$ alkylene group.

**7.** The electrolyte of claim 1, wherein the isocyanate-based additive comprises a compound represented by Formula 3:

Formula 3

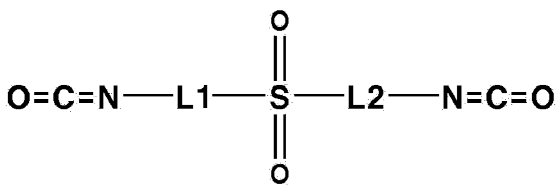

wherein in Formula 3,
L1 and L2 each independently are an unsubstituted $C_1$-$C_{30}$ alkylene group.

**8.** The electrolyte of claim 1, wherein the isocyanate-based additive comprises one or more of compounds represented by Formula 2-1 and Formula 3-1:

Formula 2-1

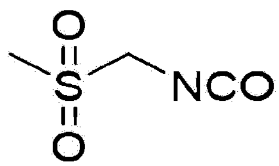

Formula 3-1

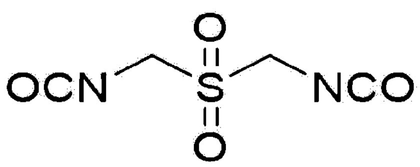

**9.** The electrolyte of claim 1, wherein the carbonate-based additive comprises vinylene carbonate (VC), vinyl ethylene carbonate (VEC), fluoroethylene carbonate (FEC), or a combination thereof.

**10.** The electrolyte of claim 1, wherein a content of the isocyanate-based compound is in a range of 0.1 wt% to 10 wt% with respect to the total weight of the electrolyte.

**11.** The electrolyte of claim 1, wherein a content of the carbonate-based compound is in a range of 0.01 wt% to 20 wt% with respect to the total weight of the electrolyte.

**12.** A lithium secondary battery comprising:

a positive electrode comprising a positive electrode active material;
a negative electrode comprising a negative electrode active material; and
an electrolyte according to any one of claims 1 to 11, located between the positive electrode and the negative electrode.

**13.** The lithium secondary battery of claim 12, wherein the positive electrode comprises a compound represented by Formula 7:

Formula 7 $Li_aNi_xCo_yM_zO_{2-b}A_b$

wherein in Formula 7, $1.0 \leq a \leq 1.2$, $0 \leq b \leq 0.2$, $0.6 \leq x < 1$, $0 < y \leq 0.4$, $0 < z \leq 0.4$, and $x+y+z=1$, wherein M is at least one selected from among manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A is F, S, Cl, Br, or a combination thereof.

FIG. 1

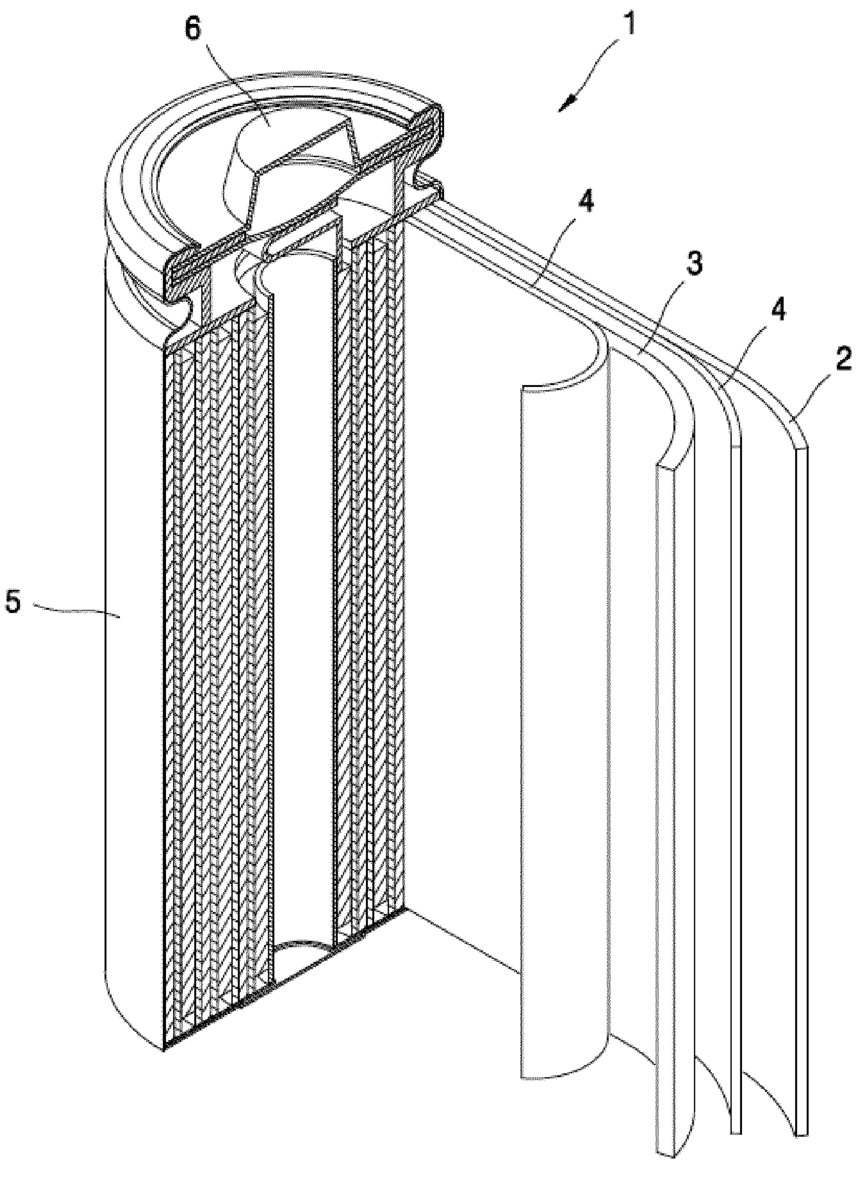

**INTERNATIONAL SEARCH REPORT**

International application No.
**PCT/KR2021/020164**

**A. CLASSIFICATION OF SUBJECT MATTER**

**H01M 10/0567**(2010.01)i; **H01M 4/525**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); C07C 311/48(2006.01); H01M 10/052(2010.01); H01M 10/0569(2010.01); H01M 4/36(2006.01); H01M 4/38(2006.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 전해액(electrolyte), 이차전지(secondary battery), 유기용매(organic solvent), 리튬염(lithium salt)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0005369 A (SAMSUNG SDI CO., LTD.) 15 January 2020 (2020-01-15) See claims 1-8; and paragraphs [0051] and [0102]. | 1-13 |
| A | KR 10-2015-0044004 A (LG CHEM, LTD.) 23 April 2015 (2015-04-23) See claims 1-15. | 1-13 |
| A | JP 2018-125313 A (MITSUBISHI CHEMICAL HOLDINGS CORP.) 09 August 2018 (2018-08-09) See claims 1-7. | 1-13 |
| A | US 2011-0008680 A1 (MULDOON, J. et al.) 13 January 2011 (2011-01-13) See claims 1-26. | 1-13 |
| A | KR 10-2015-0022654 A (SOULBRAIN CO., LTD.) 04 March 2015 (2015-03-04) See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 April 2022** | **11 April 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/020164**

| Patent document cited in search report | Publication date (day/month/year) | Patent family member(s) | Publication date (day/month/year) |
|---|---|---|---|
| KR 10-2020-0005369 A | 15 January 2020 | US 2021-0265662 A1 | 26 August 2021 |
| | | WO 2020-009340 A1 | 09 January 2020 |
| KR 10-2015-0044004 A | 23 April 2015 | None | |
| JP 2018-125313 A | 09 August 2018 | CN 105074994 A | 18 November 2015 |
| | | CN 105074994 B | 19 October 2018 |
| | | CN 109301162 A | 01 February 2019 |
| | | JP 2020-009784 A | 16 January 2020 |
| | | JP 2021-106174 A | 26 July 2021 |
| | | JP 6344381 B2 | 20 June 2018 |
| | | JP 6906476 B2 | 21 July 2021 |
| | | KR 10-2188818 B1 | 09 December 2020 |
| | | KR 10-2366343 B1 | 23 February 2022 |
| | | US 2016-0013517 A1 | 14 January 2016 |
| | | US 9947965 B2 | 17 April 2018 |
| | | WO 2014-157591 A1 | 02 October 2014 |
| US 2011-0008680 A1 | 13 January 2011 | CN 102598389 A | 18 July 2012 |
| | | CN 102598389 B | 01 April 2015 |
| | | JP 2012-531714 A | 10 December 2012 |
| | | JP 5480376 B2 | 23 April 2014 |
| | | US 8159309 B1 | 17 April 2012 |
| | | US 8383276 B2 | 26 February 2013 |
| | | WO 2010-151639 A2 | 29 December 2010 |
| | | WO 2010-151639 A3 | 07 April 2011 |
| KR 10-2015-0022654 A | 04 March 2015 | KR 10-2015-0022649 A | 04 March 2015 |
| | | KR 10-2015-0022650 A | 04 March 2015 |
| | | KR 10-2015-0022651 A | 04 March 2015 |
| | | KR 10-2015-0022652 A | 04 March 2015 |
| | | KR 10-2015-0022653 A | 04 March 2015 |
| | | KR 10-2015-0022655 A | 04 March 2015 |
| | | KR 10-2015-0022656 A | 04 March 2015 |
| | | KR 10-2015-0022657 A | 04 March 2015 |
| | | KR 10-2015-0022658 A | 04 March 2015 |
| | | KR 10-2015-0022659 A | 04 March 2015 |
| | | KR 10-2015-0022660 A | 04 March 2015 |
| | | WO 2015-026180 A1 | 26 February 2015 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020180031585
- KR 1020180056395
- KR 1020180031586